# EUROPÄISCHE PATENTANMELDUNG

(11) **EP 0 957 055 A2**
(43) Veröffentlichungstag der Anmeldung: **17.11.1999**
(21) Anmeldenummer: 99108296.7
(22) Anmeldetag: 28.04.1999
(51) Int. Cl.: B65H 31/10, B65H 31/28, B65H 31/32

(54) **Abstapelvorrichtung**

(30) Priorität: 09.05.1998 DE 19820805
(71) Anmelder: Firma Skinetta Pac-Systeme Kiener GmbH & Co., 87724 Ottobeuren (DE)
(72) Erfinder: Berndl, Ernst H., 87700 Memmingen (DE)
(74) Vertreter: Pfister, Helmut, Dipl.-Ing.

(57) **Zusammenfassung**

Die Erfindung betrifft eine Abstapelvorrichtung zum Stapeln von Gegenständen (1), insbesondere von Blisterverpackungen, zu Warenstapeln (2) mit einer Warenzuführung (4), einer Konfektioniereinheit (5) und einer Bereitstellungseinheit (6) für die Bereitstellung der Warenstapel (2) für eine Verpackung oder Verarbeitung. Die Konfektioniereinheit (5) weist ein Warenmagazin (3) mit einer Warenauflage auf, auf der die in das Warenmagazin (3) eingelegten Gegenstände (1) zu Warenstapeln (2) ablegbar sind.

Das Warenmagazin (3) weist eine erste Warenauflage (8) und eine zweite Warenauflage (9) auf, wobei die erste Warenauflage (8) bis zur Entnahme des auf der zweiten Warenauflage (9) aufliegenden Warenstapels (2) Warenstapels (2) oberhalb des Warenstapels (2) angeordnet und ein weiterer Warenstapel (2 ) auf diese aufstapelbar ist sowie nach Entnahme des unter ihm befindlichen Warenstapels (2) in die Entnahmeposition absenkbar ist.

## Beschreibung

Die Erfindung betrifft eine Abstapelvorrichtung zum Gruppieren und Stapeln von im wesentlichen flachen Gegenständen, insbesondere von Waren oder Warengebinden in Form von Blisterverpackungen, zu Warenstapeln mit einer Warenzuführung, einer Konfektioniereinheit und einer Bereitstellungseinheit für die Bereitstellung oder Übergabe der durch die Konfektioniereinheit aus mehrlagig übereinandergestapelten Gegenstände gebildeten Warenstapeln für eine nachfolgende Verpackung oder Verarbeitung, wobei die Warenzuführung die ihr zugeführten Gegenstände voneinander zu trennen und der Konfektioniereinheit im wesentlichen nacheinander kontrolliert zuzuführen vermag und die Konfektioniereinheit ein Warenmagazin mit einer Warenauflage aufweist, auf der die von oben in das Warenmagazin durch die Warenzuführung eingelegten Gegenstände mehrlagig übereinander zu Warenstapeln ablegbar sind, und wobei die fertiggestapelten Warenstapel über eine Auswurfeinheit aus dem Warenmagazin entnehmbar und der Bereitstellungseinheit zuführbar sind.

Derartige Abstapelvorrichtungen sind aus der Verpackungstechnik allgemein bekannt. Bei diesen Abstapelvorrichtungen werden flache Gegenstände, zum Beispiel im Falle von zu verpackenden Arzneimitteln sogenannte Blisterverpackungen, bei denen einzelne Tabletten zwischen einer Folie und einer Aluminiumschicht eingeschweißt sind, einem Warenmagazin über die Warenzuführung zugeführt. Bei derartigen Verpackungslinien, die meist unmittelbar hinter der Fertigungslinie angeordnet sind und die gerade produzierten Waren sofort konfektionieren und verpacken, werden die einzelnen Waren zunächst durch geeignete Trennvorrichtungen hintereinander aufgereiht und dann verpackungsgerecht gruppiert, bevor sie dann der eigentlichen Verpackungsmaschine übergeben werden.

Im Falle flacher Gegenstände, die übereinander in Kartons oder ähnlichen Verpackungen abgepackt werden, werden die Waren entweder direkt gruppiert oder zunächst in einer Vorverpackung zusammengefaßt, etwa den kartenartigen Blisterverpackungen für Tabletten, und dann in einer Umverpackung endgültig in der Form abgepackt, in der sie dann in den Handel gebracht wird. Hierzu wird der von der Abstapelvorrichtung gebildete Warenstapel von einer Kassette gegriffen und dann der Karton der Umverpackung um diesem Warenstapel herumgefaltet. Der Warenzuführung werden die einzelnen Gegenstände zum Beispiel über einen Trichter oder ein Laufband der Fertigungslinie zugeführt. Durch Abstreifer, Rückrollbänder oder ähnliche Mittel werden die Teile dann zunächst voneinander trennt und hintereinander aufgereiht.

Die Warenzuführung ist meist mit Erkennungsmitteln versehen, die ein genaues Abzählen bzw. Abwiegen der in das Warenmagazin eingeführten Warenmengen ermöglicht. Im Warenmagazin wiederum wird die gewünschte Anzahl von aufeinanderzustapelnden Teilen übereinandergelegt und ausgerichtet. Nachdem so ein zu verpackender oder weiterzuverarbeitender Warenstapel gebildet ist, wird dieser durch die Auswurfeinheit der Bereitstellung übergeben, wobei die Auswurfeinheit beispielsweise von einem Druckelement gebildet sein kann, über das der fertige Warenstapel aus dem Warenmagazin seitlich ausschiebbar ist.

Die bekannten Abstapelvorrichtungen haben jedoch den Nachteil, daß der Warenfluß nicht kontinuierlich stattfinden kann, sondern während der Tätigkeit der Auswurfeinheit der Abstapelvorgang im Warenmagazin zur Ruhe kommen muß um die Übergabe des fertigen Warenstapels nicht zu stören. Somit fallen sowohl bei der Warenzuführung als auch bei einem Teil des Warenmagazins während des Auswerfens Totzeiten an. Hierdurch erhöht sich die Verarbeitungszeit und damit wiederum die Betriebskosten bzw. die Investitionskosten für die Anschaffung der Abstapelvorrichtung.

Ein weiterer Nachteil besteht darin, daß die Fertigungslinien meist kontinuierlich arbeiten und damit der Materialfluß zur Warenzuführung der Abstapelvorrichtung ebenfalls kontinuierlich ist. Ein diskontinuierliche Arbeitsweise der Abstapelvorrichtung erfordert also einen Materialpuffer im Bereich der Warenzuführung, der wiederum zusätzliche Kosten verursacht und eine weitere Quelle für Störungen des Materialflusses in der Verpackungslinie darstellen kann. Dieser Nachteil wurde bei einer bekannten Fortentwicklung der Abstapelvorrichtung dadurch beseitigt, daß eine zweite Konfektioniereinheit vorgesehen wurde, wobei die beiden Konfektioniereinheiten jeweils abwechselnd beschickt werden.

Bei dieser Ausgestaltung ist zwar ein kontinuierlicher Betrieb möglich, da nun jeweils in einer Konfektioniereinheit der Abstapelvorgang ablaufen kann, während die Auswurfeinheit in der jeweils anderen die Übergabe des fertigen Warenstapels an die Bereitstellungseinheit bewirkt, jedoch muß dies mit erheblichen Investitionen in die erweiterte Logistik des Materialflusses erkauft werden. So müssen geeignete Weichen und Zusammenführungen vorgesehen werden, über die der Warenstrom zunächst auf die beiden Konfektioniereinheiten aufgeteilt wird und nach dem Abstapelvorgang wieder zusammengeführt werden. Hierdurch erhöhen sich sowohl die Kosten der Abstapelvorrichtung als auch der notwendige Raumbedarf.

Aufgabe der Erfindung ist daher, eine Abstapelvorrichtung zu schaffen, bei der die Verarbeitungsgeschwindigkeit bei möglichst geringen Zusatzkosten erhöht ist.

Diese Aufgabe wird nach der Erfindung dadurch gelöst, daß das Warenmagazin eine erste und zumindest eine zweite Warenauflage aufweist und die erste Warenauflage bis zur Entnahme des fertiggestapelten, auf der zweiten Warenauflage aufliegenden Warenstapels aus dem Warenmagazin oberhalb des auf der zweiten Warenauflage auf liegenden Warenstapels angeordnet ist und ein weiterer Warenstapel auf die erste Warenauflage aufstapelbar ist, wobei dieser obere Warenstapel nach der Entnahme des unter ihm befindlichen Warenstapels in die Entnahmeposition absenkbar ist.

Durch die erfindungsgemäße Ausgestaltung der Abstapelvorrichtung ist es nun möglich, bereits während die Auswurfeinheit einen fertig abgestapelten Warenstapel der Bereitstellung übergibt, mit der Gruppierung des nächsten Warenstapels zu beginnen. Nachdem die Übergabe des unteren Warenstapels an die Bereitstellung abgeschlossen ist, fährt die Auswurfeinheit in ihre Ausgangsstellung zurück und der obere Warenstapel kann anschließend abgesenkt werden, um, nachdem er vollständig zusammengestellt ist, seinerseits von der Auswurfeinheit an die Bereitstellung übergeben zu werden. Die Warenzuführung kann nun kontinuierlich arbeiten und die Menge der ausgeworfenen fertigen Warenstapel wird ohne kostspielige Redundanz der Konfektioniereinheit deutlich erhöht.

Das Absenken des Warenstapels kann entweder dadurch geschehen, daß die erste und die zweite Warenauflage jeweils beweglich und antreibbar ausgestaltet sind oder daß die obere Warenauflage so ausgestaltet ist, daß ihre Tragwirkung zum Fallenlassen des auf ihr aufgestapelten (Teil-)Stapels aufhebbar ist.

Bei einer bevorzugten Ausgestaltung wird das Warenmagazin, in dem der Stapel der zu verpackenden Gegenstände gebildet wird durch eine Wandung begrenzt, die eine Führung der Gegenstände bewirkt, während diese von oben in das Magazin eingelegt werden. Diese Wandung weist die erste Warenauflage und die zweite Warenauflage auf, die von Tragelementen gebildet sind. Die Tragelemente wiederum ragen ausreichend weit in den von dem Innenraum des Warenmagazins gebildeten Abstapelbereich hinein, so daß ein sicheres Halten und Stützen des untersten Gegenstandes gewährleistet ist.

Der Abstand zwischen der ersten und der zweiten Warenauflage kann feststehend sein, bevorzugt ist er jedoch variabel, so daß verschiedenen Stapelhöhen Rechnung getragen werden kann. Hierzu ist zumindest ein Teil der Wandung des Warenmagazins von einer Bandfläche von Förderbändern gebildet, die vertikal umlaufend angeordnet sind. Die Tragelemente sind an diesen Förderbändern angeordnet, so daß eine Bewegung des Förderbandes eine Höhenverstellung der Tragelemente bewirkt. Bei dieser Ausgestaltung werden die Förderbänder jeweils in nur eine Richtung so bewegt, daß sich die dem Abstapelbereich zugewandte Innenseite nach unten bewegt. Die Tragelemente wandern so von der Position der ersten Warenauflage im Warenmagazin mit aufgelegten Waren nach unten in die Position der zweiten Warenauflage und werden dann, nachdem die Tätigkeit der Auswurfeinheit abgeschlossen ist und diese wieder in ihre Ausgangsstellung zurückgefahren ist, zunächst nach außen um dann nach erneuter Umlenkung wieder von oben mit dem Föderband in den Abstapelbereich einzutreten. Aus diese Weise werden die Tragelemente der ersten Warenauflage durch Absenken zunächst zu den Tragelementen der zweiten Warenauflage und dann wieder die Tragelemente der ersten Warenauflage.

Die einzelnen Tragelemente der ersten und der zweiten Warenauflage können an einem gemeinsamen Förderband angeordnet sein, wobei dann der Abstand zwischen der ersten und der zweiten Warenauflage fixiert ist. Um eine ausreichende Flexibilität der Abstapelvorrichtung zu erhalten, sollte bei allgemeinen Anwendungen dieser Abstand ausreichend groß gewählt werden.

Die Wandung des Warenmagazins kann ein, zwei oder mehrere Förderbänder aufweisen. Bei leichten Gegenständen einer kleinen Anlage können die Tragelemente so groß ausgebildet sein, daß bereits ein einzelnes Tragelement den gesamten Gegenstand tragen kann. Hier ist ein Förderband bereits ausreichend. Bei größeren Anlagen und größeren Gegenständen kann auf eine Drei- oder Vierpunktlagerung des Gegenstandes zurückgegriffen werden, wobei dann zumindest ein zweites Förderband eingesetzt wird und die Tragelemente an den Förderbändern so angeordnet sind, daß sich die der ersten und der zweiten Warenauflage zugeordneten Tragelemente im wesentlichen auf einer Ebene befinden und die Geschwindigkeit der einzelnen Förderbänder untereinander synchronisiert ist. Letzteres kann beispielsweise zuverlässig durch einen gemeinsamen Antrieb, etwa über einen Riemen- oder Kettentrieb mit entsprechenden Antriebsrädern bzw. -ritzeln erfolgen.

In einer weiteren Variante der Erfindung ist es möglich, daß zwei oder mehrere unterschiedliche Warenauflagen vorgesehen sind, die zum Beispiel durch eine entsprechende Anzahl von Förderbänder realisiert sind. Das Warenmagazin weist dabei eine ausreichende Länge auf, um eine größere Anzahl von gebildeten Stapeln zwischenzupuffern, um neue Stapel oben aufzunehmen und die fertigkonfektionierte Stapel unten auszuführen.

Bei einer bevorzugten Ausgestaltung sind die Tragelemente der ersten Warenauflage und diejenigen der zweiten Warenauflage jedoch voneinander getrennt an ersten und zweiten Förderbändern angeordnet, die unabhängig voneinander antreibbar sind. Die Wandung des Warenmagazins kann bei dieser Ausgestaltung beispielsweise von vier, paarweise gegenüberliegend angeordneten Paaren von jeweils einem ersten und einem zweiten Förderband gebildet sein. Das Warenmagazin ist zum Beispiel seitlich offen oder durch Leisten bzw. Führungen zum Führen der Gegenstände verdeckt.

Bei dieser Ausführungsform ist es möglich, daß die erste Warenauflage unabhängig von der zweiten Warenauflage in der Höhe verstellt werden kann und damit der Abstand der beiden Warenauflagen individuell an die Höhe des jeweils zu gruppierenden Warenstapels angepaßt werden. Dabei kann die Anpassung des Abstandes der ersten Warenauflage von der zweiten Warenauflage entweder durch zwei Antriebe erfolgen, mit denen die ersten und die zweiten Förderbänder in eine entsprechende Position relativ zueinander verfahrbar sind, es können jedoch auch beide Bänder über einen gemeinsamen Antrieb synchron zueinander angetrieben sein und der Abstand, der nur bei Einrichtung der Abstapelvorrichtung auf eine neue Los- bzw. Verpackungsgröße durch eine Ausklink- bzw. sonstige Verstellmöglichkeit eines oder beider Förderbänder einstellbar sein. Die ersten und die zweiten Förderbänder beziehungsweise, falls nur ein Förderband vorgesehen ist, das Förderband kann über Schritt- oder Servomotoren angetrieben werden.

Zur Erhöhung des Ausstoßes kann auch die erfindungsgemäße Abstapelvorrichtung als sogenannte Tandemausführung ausbildet sein, indem sie zwei Konfektioniereinheiten aufweist. Der Vorteil besteht dann darin, daß die zweite Konfektioniereinheit nicht mehr zum Egalisieren einer Stillstandszeit der ersten benötigt wird, sondern zeitgleich mit der ersten arbeitet. Der Ausstoß dieser Tandemausführung ist gegenüber der zuvor benutzten Ausführung mit wechselnd eingesetzter Konfektioniereinheit durch die Weiterentwicklung verdoppelt. Die Tandemausführung kann eine gemeinsame Warenzuführung aufweisen oder auch von zwei Warenzuführungen versorgt werden.

Die Bereitstellungseinheit greift den von der Auswurfeinheit aus der Konfektioniereinheit geschobenen Warenstapel im Falle einer Verpackungslinie bevorzugt mittels einer Übernahmekassette, die den Warenstapel formstabil zu umgreifen vermag und einer weiteren Vorrichtung zur endgültigen Verpackung übergibt. Die Auswurfeinheit kann von einem Schieber gebildet sein, der seitlich in den Abstapelbereich einführbar ist und den Warenstapel über eine gegenüberliegende Ausnehmung in der Wandung des Warenmagazins in die Übernahmekassette der Bereitstellungseinheit zu schiebt.

In einer bevorzugten Ausgestaltung der Erfindung ist vorgesehen, daß das Warenmagazin eine Wandung aufweist, entlang derer die von oben eingelegten Gegenstände während des Stapelns geführt sind und die erste Warenauflage durch Tragelemente gebildet sind, die rechtwinklig zur Wandung hervorspringend angeordnet sind und durch die Kraft eines Antriebes zum Absenken des Warenstapels in die Wandung rückziehbar sind, wobei durch das Rückziehen der Tragelemente die Haltefunktion der ersten Warenauflage aufhebbar ist und der obere Warenstapel nach Entnahme des unteren Warenstapels auf die untere zweite Warenauflage zu fallen vermag. Für den Transport des Warenstapels in dem Warenmagazin ist hierzu kein separater Antrieb vorgesehen, sondern dies geschieht zum Beispiel auf Grund der Schwerkraft. Trageelemente an einer ersten Warenauflage, die zum Beispiel feststehend ausgebildet sind, geben einen Warenstapel frei, in dem diese einfach zurückgezogen werden. Die Wandung ist hierbei im wesentlichen der Größe des zu verpackenden bzw. zu gruppierenden Gegenstandes angepaßt.

Durch eine solche Ausgestalung wird bei einer Verbesserung der Effizienz eine kostengünstige Realisierung der Erfindung vorgeschlagen, da auf den zusätzlichen Antrieben verzichtet werden kann.

Weitere Merkmale und Vorteile der Erfindung ergeben sich aus den Unteransprüchen und aus der nachfolgenden Beschreibung bevorzugter Ausführungsbeispiele anhand der Zeichnungen.

In den Zeichnungen zeigt:
- Fig. 1: eine schaubildliche Ansicht der Konfektioniereinheit und der Warenzuführung einer erfindungsgemäßen Abstapelvorrichtung,
- Fig. 2: eine Seitenansicht des in Figur 1 dargestellten Teils der Abstapelvorrichtung,
- Fig. 3: eine Draufsicht auf den in den Figuren 1 und 2 dargestellten Teil der Abstapelvorrichtung und
- Fig. 4: eine Seitenansicht einer weiteren Ausgestaltung einer erfindungsgemäßen Abstapelvorrichtung.

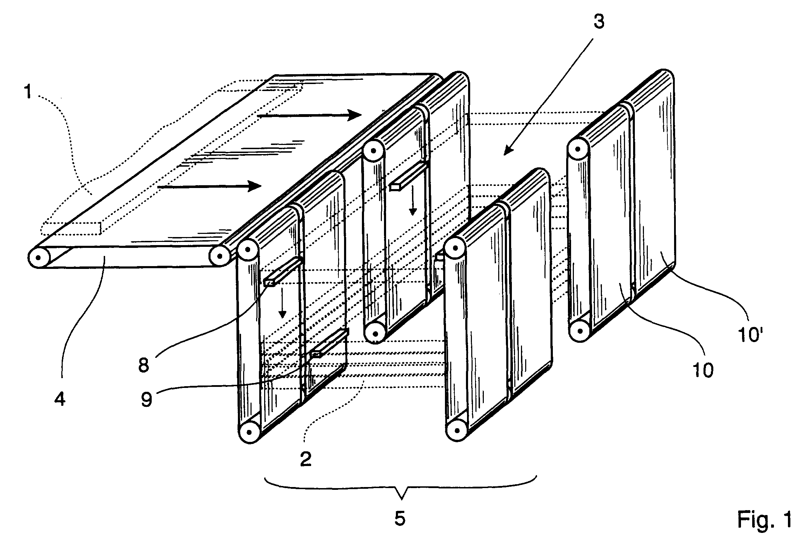

In Fig. 1 ist die Konfektioniereinheit 5 und ein Teil der Warenzuführung 4 einer erfindungsgemäßen Abstapelvorrichtung dargestellt. Die Wandung des Warenmagazins 3 wird bei dieser Ausführung im wesentlichen von vier Paaren von Förderbändern gebildet, die jeweils von einem ersten Förderband 10 und einem zweiten Förderband 10 gebildet sind. Neben den Förderbändern 10, 10' kann die Wandung selbstverständlich noch weitere Teile, etwa eine oder mehrere glattflächige und feststehende Führungs- bzw. Gleitfläche oder andere Führungselemente aufweisen, die beispielsweise ein Aufrichten oder Verkanten der von oben eingelegten Gegenstände 1 verhindern.

Die Förderbänder 10, 10' sind jeweils mit Tragelementen versehen, wobei die an den ersten Förderbändern 10 angeordneten Tragelemente die erste Warenauflage 8 und die an den zweiten Förderbändern 10'angeordneten Tragelemente die zweite Warenauflage 9 bilden. Hierzu sind die zu einer der Warenauflagen gehörenden Tragelemente 8, 9 jeweils auf gleicher Höhe angeordnet. Die beiden Förderbänder sind über Schritt- oder Servomotoren antreibbar.

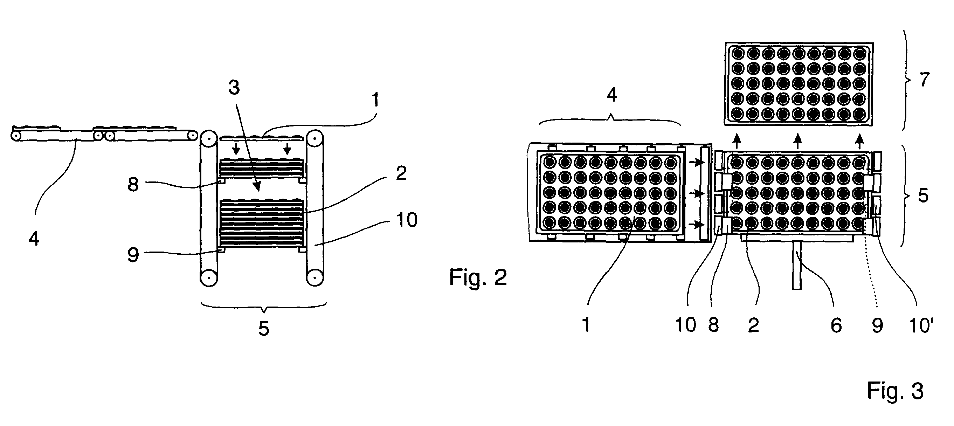

Die flachen, zu einem Warenstapel 2 zusammenzufassenden Gegenstände 1 werden der Konfektioniereinheit 5 über die Warenzuführung 4, die hier schematisch als einfaches Laufband dargestellt ist, zugeführt. Unter Ausnutzung der Schwerkraft werden die Gegenstände 1 in den Abstapelbereich des Warenmagazins 3 eingelegt, wobei der anwachsende Warenstapel zunächst auf der oberen Warenauflage 8 aufliegt , während darunter ein fertiggruppierter Warenstapel 2 angeordnet ist, der in Kürze durch die (hier nicht dargestellte) Auswurfeinheit der Bereitstellungseinheit übergeben wird. Um für die angeförderten Gegenstände 1 immer gleiche Fallbedingungen zu schaffen, kann vorgesehen sein, daß die, zum Beispiel die Fig. 2 gezeigte obere, erste Warenauflage 8 entsprechend der Dicke des aufgelegten Gegenstandes 1 nach jedem Gegenstand schrittweise abgesenkt wird.

Nachdem die Auswurfeinheit den unteren Warenstapel 2 aus dem Warenmagazin herausgeschoben hat und wieder in ihre Ausgangsposition zurückgekehrt ist, kann der obere Warenstapel in die Auswurfposition abgesenkt werden. Das Absenken kann bei entsprechendem Platzangebot zwischen der ersten Warenauflage 8 und der zweiten Warenauflage 9 kontinuierlich oder auch nach dem Abschluß des Ausschiebevorgangs in einem kurzen Absenkvorgang erfolgen. Zeitgleich mit dem Absenken der oberen Warenauflage 8 werden auch die zweiten Förderbänder 10 gleichsinnig mit den ersten Förderbändern 10 bewegt, wodurch die auf deren Bandfläche angeordneten Tragelemente zunächst nach unten aus dem Innenraum des Warenmagazins 3 herauswandern und dann zu Bildung der nun oberen Warenauflage mit dem umlaufenden Förderband 10 von oben wieder in den Abstapelbereich eintreten. Hierdurch bilden die jeweiligen Tragelemente einer Förderbandart während des Betriebs der Abstapelvorrichtung nacheinander die obere Warenauflage und die untere Warenauflage. Es ist auch möglich, daß bei entsprechender Länge des Warenmagazins 3 ein erstes Förderband 10 nicht nur einen, sondern mehrere Stapel für fertigaufgestapelten Waren aufnimmt. Dadurch ist eine Pufferung der Waren möglich.

Selbstverständlich kann die Abstapelvorrichtung auch so aufgebaut sein, das die Stapelrichtung horizontal verläuft. In diesem Fall müßten die flachen Gegenstände 1 aktiv in das Warenmagazin 3 eingeschoben werden bis sie an den Tragelementen als Begrenzung des horizontalen Verschiebeweges anliegen. Diese Begrenzung kann dann ebenfalls in der erfindungsgemäßen Weise verschoben werden.

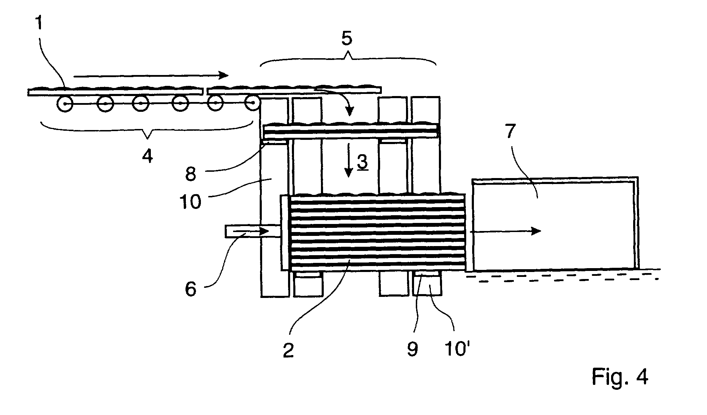

In Figur 2 eine Seitenansicht und in Figur 3 eine Draufsicht auf den in Figur 1 dargestellten Teil der Abstapelvorrichtung schematisch dargestellt. Während bei diesem Ausführungsbeispiel die Entnahmerichtung, also die Richtung, in der die Auswurfeinheit 6 den fertigen Warenstapel 2 zur Bereitstellungseinheit 7 schiebt, rechtwinklig zur Flussrichtung der über die Warenzuführung 4 eingebrachten einzelnen Gegenstände 1 angeordnet ist, wird dies Materialflussrichtung bei dem in Figur 4 dargestellten Ausführungsbeispiel nicht geändert.

Die Auswurfeinheit 6 ist hier schematisch als ein Drückelement dargestellt, das den Warenstapel 2 in eine die Form und Stapeldichte des Warenstapels erhaltende Warenkassette der Bereitstellungseinheit 7 schiebt. Über diese Warenkassette kann der Warenstapel 2 dann in einem sicheren Griff der weiteren Verpackung zugeführt werden.

Bei dem in Figur 4 gezeigten Ausführungsbeispiel bewegt sich die obere erste Warenauflage 8 bereits langsam nach unten, noch während die Auswurfeinheit 6 den unteren Warenstapel 2 der Bereitstellungseinheit 7 übergibt. Dies setzt voraus, daß die beiden Förderbänder 10, 10' nicht synchron zueinander bewegt werden, da während des Ausschiebens die untere Warenauflage 9 feststehen muß.

Bei einer vorteilhaften Weiterbildung der Konfektioniereinheit 5 können die Förderbänder 10, 10' auch synchron zueinander bewegt werden, so daß leicht und ohne großen Getriebeaufwand ein gemeinsamer Antrieb genutzt werden kann. Hierzu kann das Warenmagazin 3 einen unteren Boden aufweisen, der nach dem Durchlaufen der kontinuierlich bewegten Tragelemente der ersten Warenauflage 8 oder der zweiten Warenauflage 9 die Funktion der unteren Warenauflage übernimmt

Obwohl die vorstehende Erfindung vorstehend im wesentlichen anhand einer die nachfolgende Verpackung des Warenstapels 2 vorbereitenden Vorrichtung beschrieben wurde, kann sie natürlich auch bei anderen Anwendungen, bei denen flache Gegenstände bzw. Warengebinde zu gruppieren sind, Anwendung finden.

Die jetzt mit der Anmeldung und später eingereichten Ansprüche sind Versuche zur Formulierung ohne Präjudiz für die Erzielung weitergehenden Schutzes.

Die in den abhängigen Ansprüchen angeführten Rückbeziehungen weisen auf die weitere Ausbildung des Gegenstandes des Hauptanspruches durch die Merkmale des jeweiligen Unteranspruches hin. Jedoch sind diese nicht als ein Verzicht auf die Erzielung eines selbständigen, gegenständlichen Schutzes für die Merkmale der rückbezogenen Unteransprüche zu verstehen.

Merkmale, die bislang nur in der Beschreibung offenbart wurden, können im Laufe des Verfahrens als von erfindungswesentlicher Bedeutung, zum Beispiel zur Abgrenzung vom Stand der Technik beansprucht werden.

## Patentansprüche

1. Abstapelvorrichtung zum Gruppieren und Stapeln von im wesentlichen flachen Gegenständen (1), insbesondere von Waren oder Warengebinden in Form von Blisterverpackungen, zu Warenstapeln (2) mit einer Warenzuführung (4), einer Konfektioniereinheit (5) und einer Bereitstellungseinheit (6) für die Bereitstellung oder Übergabe der durch die Konfektioniereinheit (5) aus mehrlagig übereinandergestapelten Gegenständen gebildeten Warenstapeln (2) für eine nachfolgende Verpackung oder Verarbeitung, wobei die Warenzuführung (4) die ihr zugeführten Gegenstände voneinander zu trennen und der Konfektioniereinheit (5) im wesentlichen nacheinander kontrolliert zuzuführen vermag und die Konfektioniereinheit (5) ein Warenmagazin (3) mit einer Warenauflage aufweist, auf der die von oben in das Warenmagazin (3) durch die Warenzuführung (4) eingelegten Gegenstände (1) mehrlagig übereinander zu Warenstapeln (2) ablegbar sind, und wobei die fertiggestapelten Warenstapel (2) über eine Auswurfeinheit (7) aus dem Warenmagazin (3) entnehmbar und der Bereitetellungseinheit (6) zuführbar sind, **dadurch gekennzeichnet, daß** das Warenmagazin (3) eine erste Warenauflage (8) und zumindest eine zweite Warenauflage (9) aufweist und die erste Warenauflage (8) bis zur Entnahme des fertiggestapelten, auf der zweiten Warenauflage (9) aufliegenden Warenstapels (2) aus dem Warenmagazin (3) oberhalb des auf der zweiten Warenauflage (9) aufliegenden Warenstapels (2) angeordnet ist und ein weiterer Warenstapel (2 ) auf die erste Warenauflage (8) aufstapelbar ist, wobei dieser obere Warenstapel (2 ) nach der Entnahme des unter ihm befindlichen Warenstapels (2) in die Entnahmeposition absenkbar ist.

2. Abstapelvorrichtung nach Anspruch 1, **dadurch gekennzeichnet, daß** das Warenmagazin (3) eine offene oder geschlossene und einen Abstapelbereich begrenzende Wandung aufweist, entlang derer die von oben eingelegten Gegenstände (1) während des Stapelvorgangs geführt sind und die erste Warenauflage (8) und die zweite Warenauflage (9) von Tragelementen gebildet sind, die vertikal verschiebbar an der Wandung gelagert sind.

3. Abstapelvorrichtung nach Anspruch 2, **dadurch gekennzeichnet, daß** die Tragelemente in den Abstapelbereich ragend nach unten vertikal verschiebbar sind und nach Entnahme des auf ihnen lagernden Warenstapels (2, 2') außerhalb des Abstapelbereiches vertikal nach oben verschiebbar sind.

4. Abstapelvorrichtung nach Anspruch 3, **dadurch gekennzeichnet, daß** die Tragelemente an vertikal beweglichen, umlaufenden Förderbändern (10) angeordnet sind, wobei die Förderbänder (10) mit einer Bandfläche zumindest einen Teil der Wandung des Warenmagazins (3) bilden und die von der Bandfläche hervorspringenden Tragelemente durch die bewegten Förderbänder (10) im Abstapelbereich des Warenmagazins (3) nach unten bewegt und an der dem Abstapelbereich abgewandten Bandfläche wieder nach oben bewegt sind.

5. Abstapelvorrichtung nach Anspruch 4, **dadurch gekennzeichnet, daß** das Warenmagazin (3) zumindest ein erstes Förderband (10) und ein zweites Förderband (10 ) aufweist, wobei die die erste Warenauflage (8) bildenden Tragelemente an dem ersten Förderband (10) und die die zweite Warenauflage (9) bildenden Tragelemente an dem zweiten Förderband (10 ) angeordnet sind.

6. Abstapelvorrichtung nach Anspruch 5, **dadurch gekennzeichnet, daß** die Wandung des Warenmagazins (3) zumindest ein Paar, bevorzugt jedoch jeweils zwei Paare, einander gegenüberliegend angeordneter erster Förderbänder (10) und zumindest ein Paar, einander gegenüberliegend und neben jeweils einem ersten Förderband (10) angeordneter zweiter Förderbänder (10 ) aufweist und die Tragelemente der ersten Förderbänder (10) oder der zweiten Förderbänder (10 ) den untersten Gegenstand der aufzustapelnden Gegenstände (1) an zwei gegenüberliegenden Seiten zu untergreifen vermögen.

7. Abstapelvorrichtung nach Anspruch 5 oder 6, **dadurch gekennzeichnet, daß** die ersten Förderbänder (10) und die zweiten Förderbänder (10 ) unabhängig voneinander, insbesondere durch Schritt- oder Servomotoren antreibbar sind.

8. Abstapelvorrichtung nach Anspruch 1, **dadurch gekennzeichnet, daß** das Warenmagazin (3) eine Wandung aufweist, entlang derer die von oben eingelegten Gegenstände (1) während des Stapelns geführt sind und die erste Warenauflage (8) von Tragelementen gebildet sind, die rechtwinklig zur Wandung hervorspringend angeordnet sind und durch die Kraft eines Antriebes zum Absenken des Warenstapels (2) in die Wandung rückziehbar sind, wobei durch das Rückziehen der Tragelemente die Haltefunktion der ersten Warenauflage (8) aufhebbar ist und der obere Warenstapel (2 ) nach Entnahme des unteren Warenstapels (2) auf die untere zweite Warenauflage (9) zu fallen vermag.

9. Abstapelvorrichtung nach Anspruch 8, **dadurch gekennzeichnet, daß** die Tragelemente der ersten Warenauflage (8) zur Anpassung an unterschiedlich hohe Warenstapel (2) zusätzlich vertikal verschiebbar sind.

10. Abstapelvorrichtung nach einem der Ansprüche 1 bis 9, **dadurch gekennzeichnet, daß** sie zumindest zwei Konfektioniereinheiten (5) aufweist und die Warenzuführung (4) die zu gruppierenden Gegenstände (1) im wesentlichen abwechselnd den Konfektioniereinheiten (5) zuzuführen vermag.

11. Abstapelvorrichtung nach einem der Ansprüche 1 bis 10, **dadurch gekennzeichnet, daß** die Bereitstellungseinheit (6) zumindest eine Übernahmekassette aufweist, der der Warenstapel (2) durch die Auswurfeinheit (7) übergebbar ist und die den Warenstapel (2) bis zur weiteren Verarbeitung oder Verpackung zu umgreifen vermag.

12. Abstapelvorrichtung nach Anspruch 11, **dadurch gekennzeichnet, daß** die Auswurfeinheit (7) von einem Schieber gebildet ist, der in den Abstapelbereich einführbar ist und den Warenstapel (2) in die Übernahmekassette der Bereitstellungseinheit (6) zu schieben vermag.

13. Abstapelvorrichtung nach einem der Ansprüche 1 bis 12, **dadurch gekennzeichnet, daß** die Warenzuführung (4) eine Mengenkontrollvorrichtung aufweist, die die Menge der Konfektioniereinheit (5) übergebenen Gegenstände (1) zu bestimmen vermag.
